# EUROPEAN PATENT SPECIFICATION

(11) **EP 3 214 160 B1**
(45) Date of publication and mention of the grant of the patent: **06.03.2019**
(21) Application number: 15855093.9
(22) Date of filing: 28.10.2015
(51) Int. Cl.: C10M 169/02, F16C 33/66, F16N 11/00, F16N 39/04, C10N 20/00, C10N 30/00, C10N 40/02, C10N 50/10, F16N 7/30, C10M 171/00, F16N 7/38

(54) **BEARING DEVICE**
LAGERVORRICHTUNG
DISPOSITIF DE PALIER

(30) Priority: 29.10.2014 JP 2014220705
(43) Date of publication of application: 06.09.2017
(60) Divisional application: 19154829.6
(73) Proprietor: NSK Ltd., Tokyo 141-8560 (JP); Sato Special Oil Ltd., Osaka 536-0002 (JP); Lube Corporation, Shinjuku-ku Tokyo 169-0051 (JP)
(72) Inventor: NAKAMURA Shinya, Fujisawa-shi Kanagawa 252-0811 (JP); INAGAKI Yoshifumi, Fujisawa-shi Kanagawa 252-0811 (JP); INOUE Toshiya, Osaka-shi Osaka 536-0002 (JP); YANO Yoshitada, Osaka-shi Osaka 536-0002 (JP); SATO Yoshitomo, Sakuragawa-shi Ibaraki 309-1222 (JP)
(74) Representative: Grünecker Patent- und Rechtsanwälte PartG mbB
(86) International application number: PCT/JP2015/080467
(87) International publication number: WO 2016/068219

(56) References cited:
- EP-A1- 2 236 592
- GB-A- 2 055 431
- JP-A- H05 171 172
- JP-A- S54 120 606
- JP-A- S57 139 194
- JP-A- 2001 050 284
- JP-A- 2006 022 865
- JP-A- 2006 117 741
- JP-A- 2009 168 140
- JP-A- 2009 209 331
- JP-A- 2013 007 419
- US-A- 3 640 858
- US-A- 5 221 490

## Description

### TECHNICAL FIELD

The present invention relates to a bearing device which includes a bearing, a lubricant supply device for supplying the lubricant to the bearing and a pipe which connects the bearing and the lubricant supply device, wherein the lubricant supply device stores therein the lubricant.

### BACKGROUND ART

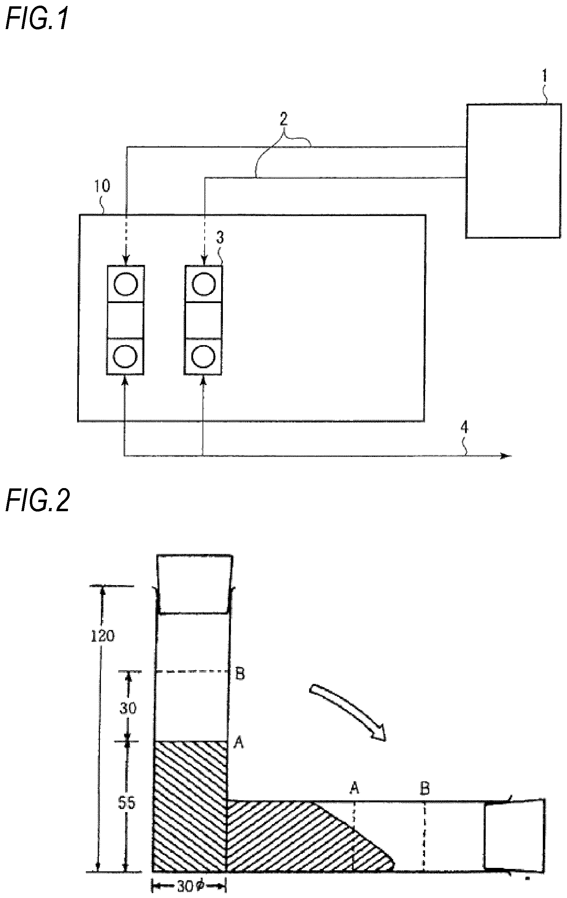

As schematically show in Fig. 1, a bearing device 10 for supporting a spindle of a machine tool includes a lubricant supply system which supplies a predetermined amount of lubricant to bearings 3 regularly or intermittently through supply pipes 2 from a lubricant supply device 1 installed outside. In general, grease compositions are used as lubricant because they can maintain lubricating property for a long time period. However, since a very small amount of grease composition is supplied to the bearings 3, in a case where grease composition which is low in penetration and relatively hard is used for a long piping route or a piping route which is bent (e.g., at a right angle) at several locations, it is very difficult to supply the grease composition stably in a predetermined very small amount due to a high piping resistance. Further, long time use of a grease composition causes a phenomenon that a thickener is separated from a base oil while receiving pressure during repeated occurrences of compression transport, and as a result, grease is wholly hardened or solidified to clog a pipe. This makes it even difficult to supply a predetermined amount of grease composition stably.

In Patent Document 1, the present applicant has improved the configuration of the lubricant supply device 1 such that a grease composition is supplied stably. However, the problem that a thickener of a grease composition is solidified may not have been solved . GB 2 0 55 431 A discloses a relubrication device for shaft bearings .

### PRIOR ART DOCUMENT

### PATENT DOCUMENT

Patent Document 1: JP-B-3,707,553

### SUMMARY OF THE INVENTION

### PROBLEMS TO BE SOLVED BY THE INVENTION

Accordingly, an object of the present invention is to enable stable supply of a lubricant to a bearing from a lubricant supply device without a problem of hardening or solidifying of the lubricant due to separation of a thickener and a base oil as in a grease composition or the like.

### MEANS FOR SOLVING THE PROBLEM

In order to solve the above problem, the present invention provides a bearing device as set out in the appended set of claims.

### EFFECTS OF THE INVENTION

Since the wax-containing lubricant does not contain a thickener, a situation where as in the case of a grease composition a thickener is separated from a base oil to clog a pipe and obstruct supply of a lubricant from a lubricant supply device to a bearing. Accordingly, the bearing device according to the present invention is supplied with the wax-containing lubricant from the lubricant supply device stably for a long time period, and thereof, the bearing device has a longer life than in the case of a grease supply method.

### BRIEF DESCRIPTION OF THE DRAWINGS

Fig. 1 is a schematic diagram of a bearing device for supporting a spindle of a machine tool which is an example of a lubricant supply system.
Fig. 2 shows a liquefaction temperature.
Fig. 3 is a graph showing a measurement result of a temperature-dependent variation of a viscosity of a wax-containing lubricant which was prepared in Example 1.
Fig. 4 is a graph showing a measurement result of a temperature-dependent variation of a movement distance of the wax-containing lubricant in a viscometer, which was prepared in Example 1.
Fig. 5 is a graph showing a measurement result of a temperature-dependent variation of a viscosity of a wax-containing lubricant which was prepared in Example 2.

### DETAILED DESCRIPTION OF EMBODIMENTS

The present invention will be described in detail.

In the present invention, there are no limitations on the bearing device as long as a lubricant supply device is connected to a bearing by a pipe. Fig. 1 shows an example of a bearing device 10 for supporting a spindle of a machine tool.

There are no limitations on a lubricant supply device 1 as long as it discharges a predetermined amount of lubricant stored therein into a supply pipe 2 regularly, as in the conventional case. That is, although the lubricant supply device 1 according to the present invention includes a tank for storing a wax-containing lubricant, compression transport means for discharging a predetermined amount of wax-containing lubricant from the tank into the supply pipe 2 regularly, and the like, the specific configuration thereof may be same or similar to conventional lubricant supply device. As described later, although a wax-containing lubricant is discharged from the lubricant supply device 1 in semi-solid form and moves through the inside of the supply pipe 2 also in semi-solid form, conventional lubricant supply device for grease compositions can be used for the wax-containing lubricant since it has lubricating property as containing a lubricating oil and a wax as basic components and has semi-solid form, and the wax functions like a thickener for a grease.

The wax-containing lubricant has a lubricating oil and a wax as basic components. A wax is solidified or semi-solidified below its melting temperature and is in liquid form and flowable at or above its melting point. As such, a wax itself changes reversibly between a semi-solid state and a liquid state at around its melting temperature. In contrast, the wax-containing lubricant according to the present invention is a mixture of a lubricating oil (liquid) and a wax (semi-solid) and corresponds to a diluted solution produced by adding a lubricating oil (dilution liquid) to a wax (solute). Therefore, the wax-containing lubricant changes from a semi-solid state to a liquid state at a temperature which is lower than the melting temperature of the wax. The temperature at which such change occurs from a semi-solid state to a liquid state (hereinafter referred to as a "liquefaction temperature") is closely related to the melting temperature of the wax contained and the mixing ratio of the wax and the lubricating oil. That is, since the melting temperature of the wax is higher than the liquefaction temperature, the liquefaction temperature can be controlled to a predetermined temperature which is lower than or equal to the melting temperature of the wax based on the mixing ratio of the wax and the lubricating oil. Specifically, the difference between the liquefaction temperature and the wax melting point can be set in an approximate range of 10°C to 30°C by employing proper kinds of lubricating oil and wax and setting the their mixing ratio at a proper value. Further, a state change can be made reversibly between a liquid state and a semi-solid state according to the temperature by adjusting the kind of wax, the mixing ratio of the wax and the lubricating oil, and other factors.

Incidentally, in the present invention, a liquid state and a liquefaction temperature is determined according to the following procedure (see Fig. 2). This method conforms to the rule defined in the Japanese Rules relating to the restriction of hazardous materials, Chapter 12 Miscellaneous rules and Article 69-2 (definition of a liquid state).
(1) Put a test object (wax-containing lubricant) into two test tubes (diameter: 30 mm; height: 120 mm) to line A (height: 55 mm).
(2) Seal one test tube (liquefaction determination test tube) tightly using a rubber stopper having no hole.
(3) Seal the other test tube (temperature measurement test tube) tightly using a rubber stopper to which a thermometer is attached. The thermometer is inserted such that its tip is set at a depth of 30 mm from the surface of the test object and it is erected with respect to the test tube.
(4) Place the two test tubes in a thermostat oven whose temperature is kept at (liquefaction check temperature) ± 0.1°C such that they are erected and kept stationary and that line B (30 mm above the surface of the test object) is lower than the water surface of the thermostatic oven.
(5) Keep the temperature measurement test tube as it is for 10 minutes after the temperature of the test object in the test tube becomes equal to (liquefaction check temperature) ± 0.1°C.
(6) Take out the liquefaction determination test tube from the thermostat oven while being kept erected on a horizontal stage, make it fallen down immediately such that it comes to lie horizontally on the stage, and measure a time for the tip of the test object to reach line B.
(7) Determine that the test object is in a liquid state if the time for the tip of the test object to reach line B is within 90 sec.
(8) Perform steps (1)-(7) while varying the temperature of the thermostat oven and assume a temperature at which a liquid state is determined as a liquefaction temperature.

The liquefaction temperature is not a single-point temperature unlike the solidification temperature of water (0°C; pure water, under atmospheric pressure) but is defined and quantified so as to be in an approximate range of (particular temperature) ± 2°C.

Alternatively, as described in Examples later, a liquefaction temperature may be defined as follows using a cone-and-plate viscometer (E-type viscometer). When the temperature is increased gradually, a temperature around which the viscosity variation becomes constant appears in the vicinity of a liquefaction temperature. This temperature can be regarded as a liquefaction temperature.

To supply the wax-containing lubricant to the inside of the bearing 3 from the lubricant supply device 1, a liquid wax-containing lubricant is caused to flow into the bearing 3 via a supply hole which is formed in the outer ring of the bearing 3. In a bearing device for supporting a spindle of a general machine tool, in order to prevent seizing-up of the spindle, a cooling pipe is routed around the outer ring in a housing and cooling is performed to keep the bearing temperature in an approximate range of 40°C to 50°C. As a result, the wax-containing lubricant supplied from the lubricant supply device 1 needs to flow through the inside of the supply pipe 2 in a semi-solid state and to change into a liquid state at least immediately before reaching the supply hole which is formed in the outer ring of the bearing 3 (indicated by broken lines in the figure). In the present invention, the liquefaction temperature is set in a range of 10°C to 70°C.

Since the temperature inside the bearing 3 is in a range of 40°C to 50°C or higher than this range, the wax-containing lubricant supplied is kept in a liquid state. Since the wax-containing lubricant does not contain a thickener and the lubricating oil and the wax are both lubricating components, it is in the same state as a grease composition in which the proportion of the base oil is increased. The wax-containing lubricant therefore exhibits better lubrication performance than grease compositions. Thus, the supply amount per one discharge can be made smaller and the supply interval can be made longer. As a result, the consumption of the wax-containing lubricant can be reduced, and thereof, the life of the overall lubricant supply system can be elongated.

Further, since the wax-containing lubricant does not contain a thickener unlike grease compositions, it is not solidified even receiving pressure, and therefore, it can be supplied stably even if the supply pipe 2 is long or has bent portions.

After serving for lubrication, the wax-containing lubricant is sent out of the housing through an ejection pipe 4 after being discharged from the bearing 3. Since the ejection pipe 4 is exposed to the external air (room temperature), during that course the wax-containing lubricant returns to a semi-solid state from a liquid state. In grease compositions, residues which are produced originating from the thickener due to long time use obstruct an air flow, possibly causing a temperature increase of the bearing 3. In contrast, the wax-containing lubricant is free of this problem since it remains in a liquid state until it reaches a certain distance from the bearing 3 after being discharged from it.

The wax-containing lubricant contains the lubricating oil and the wax as basic components. There are no limitations on the kinds of the lubricating oil and the wax as long as the wax-containing lubricant has sufficient lubricating property and is in a liquid state in a temperature range of 10°C to 70°C and changes to a semi-solid state at a temperature which is lower than that range. It is preferable that the wax-containing lubricant be prepared to change reversibly between a liquid state and a semi-solid state as the temperature varies.

The lubricating oil is a paraffin-based or naphthene-based mineral oil or a synthetic oil being selected from the group of an ester oil, a hydrocarbon oil, or an ether oil. The lubricating oil may also be a mixture of plural kinds of oils. The viscosity of the lubricating oil may be in a general range. However, considering lubricating property which is required for the bearing 3, it is preferable that its kinematic viscosity at 40°C be in a range of 5 to 200 mm²/s. The kinematic viscosity of the lubricating oil is set according to the use of a bearing. When it is desired to satisfy both of a small temperature increase characteristic and high resistance to seizing-up as in the case of, for example, bearings for a spindle of a machine tool, it is preferable that the kinematic viscosity of the lubricating oil be in a range of 10 to 130 mm²/s (at 40°C).

On the other hand, the wax is an organic substance having an alkyl group which is in a solid state or a semi-solid state at normal temperature. In the present invention, the wax is either of a natural wax or a synthetic wax. However, since the wax forms a mixture with the lubricating oil inside the bearing 3, it is preferable that the wax be high in compatibility with the lubricating oil. Natural waxes are selected from the group consisting of an animal/vegetable wax, a mineral wax, and a petroleum wax, and synthetic waxes are selected from a Fischer-Tropsch wax, a polyethylene wax, oil and fat type synthetic waxes being an ester, ketone, and amide, and a hydrogenated wax. Plural ones of the above examples may be used in mixture. However, since the liquefaction temperature of the wax-containing lubricant is substantially determined by the melting temperature of the wax and the mixing ratio of the wax and the lubricating oil, the wax should be selected from the above examples and mixed with the lubricating oil at a proper mixing ratio such that the liquefaction temperature of a resulting wax-containing lubricant falls within the range of 10°C to 70°C. It is preferable that the liquefaction temperature (i.e., the temperature at which the wax-containing lubricant changes to a liquid state) be set according to the use of a bearing. For example, in the case of bearings for machine tools, it is preferable that the liquefaction temperature be set at a temperature in a range of 30°C to 70°C.

Where an ester oil is used as the lubricating oil, from the viewpoint of compatibility, a microcrystalline wax can be used to form a preferable combination of the lubricating oil and the wax.

The mixing ratio of the lubricating oil and the wax is 10 to 40 mass% of the wax and 90 to 60 mass% of the lubricating oil with respect to the total mass of them. As the proportion of the wax increases, the flowability of the wax-containing lubricant being in a semi-solid state becomes lower; if the proportion of the wax is higher than 40 mass%, its dischargeability from the lubricant supply device 1 and its transportability in the supply pipe 2 are low. In particular, where importance is attached to flowability, it is preferable that the mixing proportion of the wax be higher than or equal to 10 mass % and lower than 20 mass% and the mixing proportion of the lubricating oil be lower than or equal to 90 mass% and higher than 80 mass%. Incidentally, there are cases where a wax is added as an oiliness

improver for a lubricating oil or a grease. The wax-containing lubricant is given a semi-solid property (thickener function) of the same level as the case of a grease by setting the addition proportion of the wax larger than the addition proportions of general additives, as described above.

For example, while the melting temperature of a microcrystalline wax is 67°C to 98°C, the liquefaction temperature of a wax-containing lubricant produced by mixing it with a lubricating oil can be set at a predetermine temperature in a range of 35°C to 50°C. While the melting temperature of a paraffin wax is 47°C to 69°C, the liquefaction temperature of a wax-containing lubricant produced by mixing it with a lubricating oil can be set at a predetermined temperature in a range of 20°C to 35°C.

Further, any of various additives can be added to the wax-containing lubricant according to its purpose. For example, any of a known anti-oxidizing agent, anti-rust agent, extreme-pressure additive, and the like can be added at a proper proportion.

To prepare the wax-containing lubricant, a wax is heated to a temperature which is higher than or equal to its melting temperature so as to be changed into a liquid form, then a lubricating oil or a lubricating oil added with an additive is added to and mixed sufficiently with the wax, and the mixture is cooled to a temperature which is lower than the melting temperature of the wax (usually, approximately to a temperature which is lower than or equal to the liquefaction temperature). Alternatively, a lubricating oil or a lubricating oil added with an additive and a solid wax are put into a proper container, all of the components are mixed together by heating them to a temperature which is higher than or equal to the melting temperature of the wax, and the mixture is cooled to a temperature which is lower than or equal to the liquefaction temperature.

It is particularly preferable that the wax-containing lubricant be used for lubrication of a ball bearing. In a ball bearing, balls roll with a contact angle line as an equator, whereby the balls produce a pumping effect to create an air flow in the space where a lubricant is sealed. Thus, the use of a highly flowable wax-containing lubricant makes it possible to prevent the lubricant from staying in the bearing, which provides advantageous that temperature increase of the bearing can be prevented.

### EXAMPLES

The present invention will be further described below using Examples. However, the present invention is not limited to them.

### <Example 1>

### (Preparation of wax-containing lubricant)

A wax-containing lubricant was produced by mixing together 78.5 mass% of diester oil (dioctyl sebacate), 15 mass% of microcrystalline wax (melting temperature: 82°C), and 6.5 mass% of additive mixture containing an anti-oxidizing agent and an extreme-pressure additive at a temperature which is higher than the melting temperature of the wax and cooling the mixture naturally to room temperature.

### (Temperature dependence of viscosity)

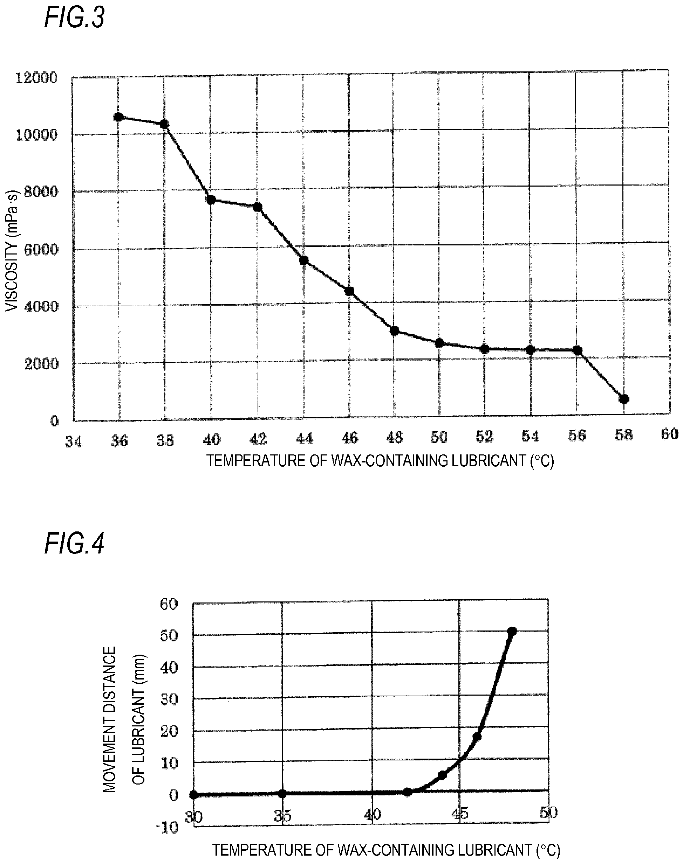

The viscosity of the above wax-containing lubricant was measured using a cone-and-plate viscometer (E-type viscometer) by changing the temperature. Results are shown in Table 1 and Fig. 3. It is seen that the viscosity decreases and the flowability increases as the temperature increases. Specifically, as shown in Fig. 4, no movement of the sample surface occurred in a temperature range which is lower than 42°C. Movements of 5 mm and 17 mm were confirmed at 44°C and 46°C, respectively. At 48°C, the sample surface moved more than 50 mm and reached the tip of the container. It is thus concluded that the liquefaction temperature of the wax-containing lubricant having the composition of Example 1 is 47°C. That is, it is found that this wax-containing lubricant starts to change from a semi-solid state to a liquid state at around 47°C and hence can be used for lubricant supply systems for bearing device for supporting a spindle of a general machine tool.

**[Table 1]**

| Temperature (°C) | Viscosity (mPa·s) |
|---|---|
| 36 | 10,590 |
| 38 | 10,310 |
| 40 | 7,650 |
| 42 | 7,380 |
| 44 | 5,510 |
| 46 | 4,400 |
| 48 | 3,000 |
| 50 | 2,570 |
| 52 | 2,345 |
| 54 | 2,300 |
| 56 | 2,260 |
| 58 | 520 |

### <Example 2>

### (Preparation of wax-containing lubricant)

A wax-containing lubricant was produced by mixing together 83 mass% of diester oil (dioctyl sebacate), 10.5 mass% of microcrystalline wax (melting temperature: 72°C), and 6.5 mass% of additive mixture containing an anti-oxidizing agent and an extreme-pressure additive at a temperature which is higher than the melting temperature of the wax and cooling the mixture naturally to room temperature.

### (Temperature dependence of viscosity)

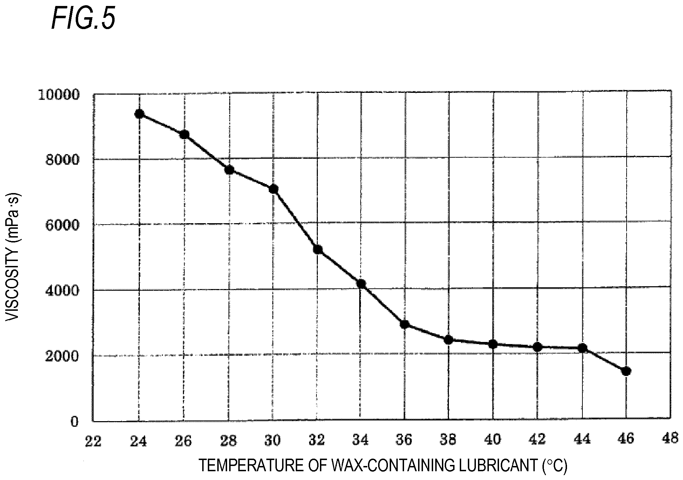

The viscosity of the above wax-containing lubricant was measured using the cone-and-plate viscometer (E-type viscometer) by changing the temperature in the same manner as in Example 1. Results are shown in Fig. 5. In the wax-containing lubricant having the composition of Example 2, the viscosity variation rate due to temperature increase starts to decrease at 38°C, which means that the liquefaction temperature is around 38°C. It is thus concluded that this wax-containing lubricant can be used for lubricant supply systems for bearing device that are used in an approximate range of 20°C to 40°C.

### DESCRIPTION OF REFERENCE NUMERALS

1: Lubricant supply device2: Supply pipe3: Bearing4: Ejection pipe10: Bearing device

## Claims

1. A bearing device comprising:
a bearing;
a lubricant supply device for supplying a lubricant to the bearing; and
a pipe which connects the bearing and the lubricant supply device, wherein the lubricant supply device stores therein the lubricant, causes the lubricant to flow through the pipe in a semi-solid state, and supplies the lubricant to the bearing while making the lubricant to change into the liquid state, wherein the lubricant contains a lubricating oil and a wax in a ratio of 90 to 60 mass% of the lubricating oil and 10 to 40 mass% of the wax with respect to a total mass of both, and which changes into a liquid state at a predetermined temperature in a range of 10°C to 70°C, wherein the liquefaction temperature is determined according to Chapter 12, Misc Provision 69-2 of the Rules for Regulations of Harzadous Substances in Japan, and
wherein the lubricating oil is selected from the group consisting of a paraffin-based mineral oil; a naphthene-based mineral oil; a synthetic oil being selected from the group of an ester oil, a hydrocarbon oil, and an ether oil; and mixtures thereof; and
wherein the wax is selected from the group consisting of a natural wax selected from the group of an animal/vegetable wax, a mineral wax and a petroleum wax; and a synthetic wax being selected from a Fischer-Tropsch wax, a polyethylene wax, oil and fat type synthetic waxes being an ester, ketone and amide, and a hydrogenated wax, wherein the wax is an organic substance having an alkyl group which is in a solid state or a semi-solid state at normal temperature.

2. The bearing device according to claim 1,
wherein the lubricant changes into a semi-solid state at a temperature which is lower than a liquefaction temperature.

3. The bearing device according to claim 1 or 2,
wherein the state change between the liquid state and a semi-solid state is reversible.

4. The bearing device according to any one of claims 1 to 3,
wherein the lubricant contains the lubricating oil in a ratio of 90 to 80 mass% and the wax in a ratio of 10 mass% or more and lower than 20 mass%.

5. The bearing device according to any one of claims 1 to 4,
wherein a kinematic viscosity of the lubricating oil is 5 to 200 mm²/s at 40°C.

6. The bearing device according to any one of claims 1 to 5,
wherein the lubricating oil is an ester oil and the wax is a microcrystalline wax.

## Patentansprüche

1. Lagervorrichtung, umfassend:
ein Lager;
eine Schmiermittelversorgungsvorrichtung zum Versorgen des Lagers mit einem Schmiermittel und
ein Rohr, welches das Lager und die Schmiermittelversorgungsvorrichtung verbindet, wobei die Schmiermittelversorgungsvorrichtung das Schmiermittel darin aufbewahrt, verursacht, dass das Schmiermittel in einem halbfesten Zustand durch das Rohr fließt, und das Lager mit dem Schmiermittel versorgt, während es bewirkt, dass das Schmiermittel in den flüssigen Zustand wechselt, wobei das Schmiermittel ein Schmieröl und ein Wachs in einem Verhältnis von 90 bis 60 Massenprozent Schmieröl und 10 bis 40 Massenprozent Wachs in Bezug auf eine Gesamtmasse beider enthält und es bei einer vorbestimmten Temperatur in einem Bereich von 10 °C bis 70 °C in einen flüssigen Zustand wechselt, wobei die Verflüssigungstemperatur gemäß Kapitel 12, Sonstige Regelungen 69-2 der Regeln für die Bestimmungen über Gefährliche Substanzen in Japan bestimmt wird, und
wobei das Schmieröl aus der Gruppe ausgewählt ist, bestehend aus einem Mineralöl auf Paraffinbasis; einem Mineralöl auf Naphthen-Basis; einem synthetischen Öl, das aus der Gruppe aus einem Esteröl, einem Kohlenwasserstofföl und einem Etheröl ausgewählt ist, und Gemischen davon, und
wobei das Wachs aus der Gruppe ausgewählt ist, bestehend aus einem natürlichen Wachs, ausgewählt aus der Gruppe aus einem tierischen/pflanzlichen Wachs, einem Mineralwachs und einem Petroleumwachs, und einem synthetischen Wachs, das ausgewählt ist aus einem Fischer-Tropsch-Wachs, einem PolyethylenWachs, synthetischen Wachsen des Öl- und Fett-Typs, bei denen es sich um einen Ester, ein Keton und Amid und ein hydriertes Wachs handelt, wobei es sich bei dem Wachs um eine organische Substanz mit einer Alkylgruppe handelt, die sich bei einer normalen Temperatur in einem festen oder einem halbfesten Zustand befindet.

2. Lagervorrichtung gemäß Anspruch 1,
wobei das Schmiermittel bei einer Temperatur, die niedriger als eine Verflüssigungstemperatur ist, in einen halbfesten Zustand wechselt.

3. Lagervorrichtung gemäß Anspruch 1 oder 2,
wobei der Zustandswechsel zwischen dem flüssigen Zustand und einem halbfesten Zustand reversibel ist.

4. Lagervorrichtung gemäß einem der Ansprüche 1 bis 3,
wobei das Schmiermittel das Schmieröl in einem Verhältnis von 90 bis 80 Massenprozent und das Wachs in einem Verhältnis von 10 Massenprozent oder mehr und weniger als 20 Massenprozent enthält.

5. Lagervorrichtung gemäß einem der Ansprüche 1 bis 4,
wobei eine kinematische Viskosität des Schmieröls bei 40 °C 5 bis 200 mm²/s beträgt.

6. Lagervorrichtung gemäß einem der Ansprüche 1 bis 5,
wobei es sich bei dem Schmieröl um ein Esteröl und bei dem Wachs um ein mikrokristallines Wachs handelt.

## Revendications

1. Dispositif de palier comprenant :
un palier ;
un dispositif d'apport de lubrifiant pour apporter un lubrifiant au palier ; et
un tuyau qui relie le palier et le dispositif d'apport de lubrifiant, où le dispositif d'apport de lubrifiant conserve dans son intérieur le lubrifiant, amène le lubrifiant à s'écouler à travers le tuyau à l'état semi-solide et apporte le lubrifiant au palier, tout en faisant passer le lubrifiant à l'état liquide, le lubrifiant contenant une huile lubrifiante et une cire dans un rapport de 90 à 60 % en masse de l'huile lubrifiante et de 10 à 40 % en masse de la cire par rapport à une masse totale des deux, et qui passe à l'état liquide à une température prédéfinie dans une plage de 10 °C à 70 °C, la température de liquéfaction étant déterminée selon le chapitre 12, « Misc Provision 69-2 » du document « Rules for Regulations of Hazardous Substances in Japan », et
l'huile lubrifiante étant choisie dans le groupe constitué d'une huile minérale à base de paraffine ; d'une huile minérale à base de naphtène ; d'une huile synthétique qui est choisie dans le groupe formé d'une huile ester, d'une huile hydrocarbure et d'une huile éther ; et de mélanges de celles-ci ; et
la cire étant choisie dans le groupe constitué d'une cire naturelle choisie dans le groupe d'une cire animale/végétale, d'une cire minérale et d'une cire de pétrole ; et d'une cire synthétique qui est choisie parmi une cire de Fischer-Tropsch, une cire de polyéthylène, des cires de synthèse de type huile et graisse qui sont un ester, une cétone et une amide, et une cire hydrogénée, la cire étant une substance inorganique ayant un groupe alkyle qui est dans un état solide ou un état semi-solide à température normale.

2. Dispositif de palier selon la revendication 1,
dans lequel le lubrifiant passe à l'état semi-solide à une température qui est inférieure à une température de liquéfaction.

3. Dispositif de palier selon la revendication 1 ou 2,
dans lequel le changement d'état entre l'état liquide et un état semi-solide est réversible.

4. Dispositif de palier selon l'une quelconque des revendications 1 à 3,
dans lequel le lubrifiant contient l'huile lubrifiante dans un rapport de 90 à 80 % en masse et la cire dans un rapport de 10 % en masse ou plus et moins de 20 % en masse.

5. Dispositif de palier selon l'une quelconque des revendications 1 à 4,
dans lequel une viscosité cinématique de l'huile lubrifiante va de 5 à 200 mm²/s à 40 °C.

6. Dispositif de palier selon l'une quelconque des revendications 1 à 5,
dans lequel l'huile lubrifiante est une huile ester et la cire est une cire microcristalline.
